# EUROPEAN PATENT APPLICATION

(11) **EP 2 128 553 A2**
(43) Date of publication of application: **02.12.2009**
(21) Application number: 09158910.1
(22) Date of filing: 28.04.2009
(51) Int. Cl.: F41B 3/02

(54) **Catapult and shot carrier**

(30) Priority: 30.05.2008 GB 0809883
(71) Applicant: Simons 2000 Ltd, Barkham Wokingham Berkshire RG40 4TS (GB)
(72) Inventor: Huges, Mike, Wokingham, Berkshire RG40 4TS (GB)
(74) Representative: Chapman, Helga Claire

(57) **Abstract**

A catapult (10) comprises a bifurcated body (11) having a handle (13) and a pair of arms (12a,12b) which diverge from an end of the handle, the catapult further comprises an elongate resiliently extendable member (19) which extends between the arms, wherein the member comprises opposite ends which extend along respective arms and which are releasably secured relative to the body.
The catapult further comprising a shot carrier (21) for receiving shot to be launched by said catapult.

## Description

The present invention relates to a catapult and a shot carrier from which shot is launched by a catapult.

Catapults, or slingshots as they are also known, generally comprise a bifurcated body comprising a pair of arms, which diverge from a handle portion. A pair of resiliently extendable members are secured to the catapult, with the members of the pair being secured at one end to the distal end of respective arms. The other end of each member is typically secured to a pouch or shot carrier from which the shot is launched. By placing shot, such as fish bait or a stone, within the pouch and pulling back on the pouch with respect to the body, the member will stretch. Accordingly, upon releasing the pouch the shot will be launched forwardly of the catapult through the arms.

It is found however that the members can unexpectedly snap, particularly in places where the members are coupled to the pouch and the arms. In addition, it is found that after repeated use of the catapult, the members can lose their resilience to stretching and increase in length.

A further problem with known catapults is that the resiliently extendable members which extend from each arm are of a fixed length. Accordingly, it is has been found difficult to adjust the range through which the shot can be launched.

We have now devised a catapult which alleviates the above-mentioned problems.

In accordance with the present invention, as seen from a first aspect, there is provided a catapult comprising a bifurcated body having a handle and a pair of arms which diverge from an end of the handle, the catapult further comprising an elongate resiliently extendable member which extends between the arms, wherein the member comprises opposite ends which extend along respective arms and which are releasably secured relative to the body.

The resiliently extendable member is not directly coupled to the body and as such, the member does not experience any undue stress that is associated with direct coupling of the member to the body. This therefore reduces the likelihood of the member snapping. Furthermore, as the member is not directly coupled to a pouch, there is no risk of separation of the member from the pouch.

The catapult of the present invention further enables the length of the member which extends between the arms to be lengthened or shortened, so as to alter the force developed by the member in launching the shot, and thus the distance through which the shot can be launched

The resiliently extendable member preferably also extends along the handle.

Preferably, the opposite ends of the member extend outwardly from the handle.

The handle and each arm of the body are preferably hollow such that the opposite ends of the member can preferably pass within the body, through the respective arms and the handle. The opposite ends of the member are preferably releasably clamped with clamping means, such that the opposite ends of the member cannot be pulled from the body when the member is under tension. Upon releasing the clamping means, the length of the member between the arms can be varied so as to alter the launching force that can be applied to the shot and thus the distance through which the shot can be launched.

Preferably, the clamping means may comprise a clamp which clamps the opposite ends together and/or which clamps the opposite ends to the handle.

The catapult preferably further comprises means for receiving the shot to be launched. Preferably, the means for receiving the shot to be launched comprises a shot carrier, the shot carrier comprising a receptacle for holding the shot and a handle extending from the receptacle for gripping the carrier.

The resiliently extendable member preferably extends along a passage defined on the shot receiving means, which couples the latter to the member

The passage preferably comprises a plurality of eyelets disposed on the exterior of the shot receiving means, through which the member may extend. The eyelets maintain the alignment of the shot receiving means with the taught member, such that as the taught member retracts upon releasing the shot receiving means, the shot therein is launched in the direction of the retracting member.

The carrier handle preferably extends from the receptacle in a direction, such that the central axis of the handle extends substantially along a central axis of the receptacle. This ensures that there is substantially no torque created upon the receptacle when pulling on the handle to extend the member.

In accordance with the present invention as seen from a second aspect, there is provided a shot carrier for receiving shot to be launched by a catapult, the shot carrier comprising a receptacle for holding the shot and a handle secured to the receptacle for gripping the carrier.

Preferably, the receptacle comprises a substantially conical shaped body.

In accordance with the present invention as seen from a third aspect, there is provided a catapult comprising a bifurcated body having a handle and a pair of arms which diverge from an end of the handle, the catapult further comprising an elongate resiliently extendable member which extends between the arms and a shot carrier for receiving the shot to be launched coupled to the member at a point intermediate the arms.

Preferably, the member extends through a passage formed on the shot carrier, which couples the member to the shot carrier.

An embodiment of the present invention will now be described by way of an example only and with reference to the accompanying drawings, in which:
Figure 1 is a perspective view of a catapult in accordance with the present invention;
Figure 2 is a sectional view along the length of the body of the catapult of figure 1;
Figure 3 is a view from one side of the shot carrier of the catapult of figure 1;
Figure 4 is a view from another side of the shot carrier of figure 3; and,
Figure 5 is a perspective view of the shot carrier of figure 4.

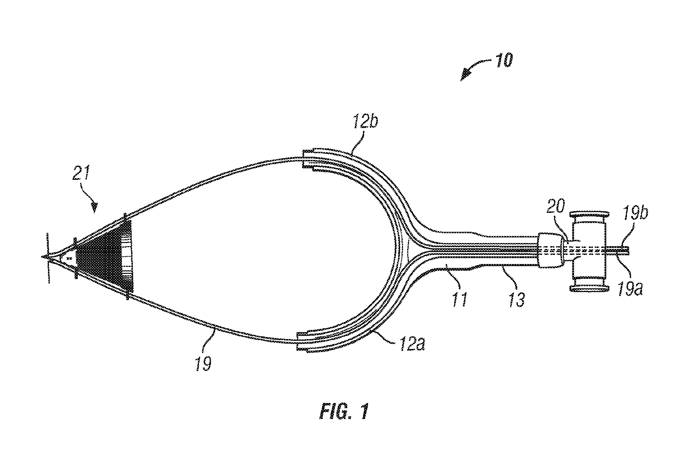

Referring to figure 1 of the drawings, there is shown a catapult 10 according to the present invention. The body 11 of the catapult 10 is bifurcated and comprises first and second arms 12a, 12b which diverge from an end of a handle portion 13. The arms 12a, 12b extend forwardly of the handle portion 13 in substantially the same plane as the handle 13, to form a substantially fork shape.

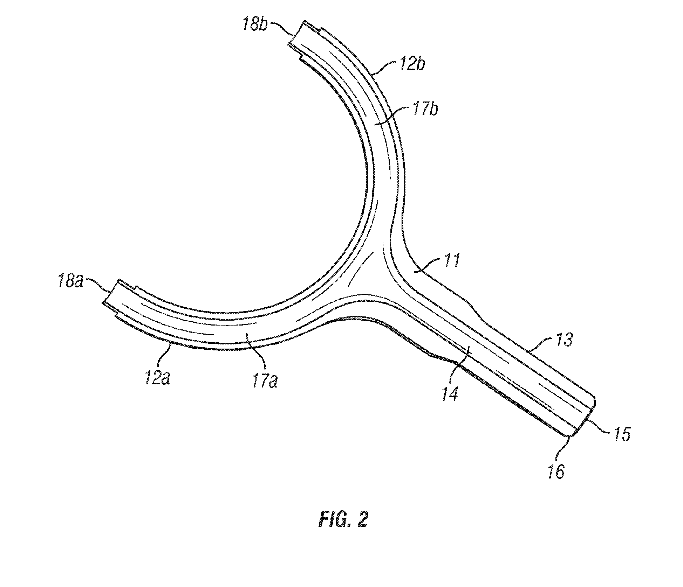

The handle 13 and first and second arms 12a, 12b are substantially hollow and comprise an internal passage as shown in figure 2. The internal passage 14 of the handle 13 extends from an opening 15 at the base 16 of the handle 13, through the body 11 and meets the internal passage 17a, 17b of the first 12a and second arm 12b respectively, at the bifurcation point of the body 11. The internal passages 17a, 17b of the arms 12a, 12b are in communication with the internal passage 14 of handle 13 and extend along the respective arm to an opening 18a, 18b formed at the distal end of each arm 12a, 12b. An elongate resiliently extendable member 19 such as the extendable cord disclosed in European Patent No. EP1183945 is then secured to the body 11 to provide the necessary elasticity for launching shot (not shown).

The free ends 19a, 19b of the cord 19 are separately passed into the open end 18a, 18b of each arm 12a, 12b and pushed along the respective arm until they meet at the bifurcation point of the body. The free ends 19a, 19b are then further pushed along the passage 14 within the handle portion 13 and out through the opening 15 at the base 16 of the handle 13. The free ends 19a, 19b of the cord 19 are then further passed through a clamp 20 which releasably clamps the free ends 19a, 19b of the cord 19 together such that the free ends 19a, 19b cannot be pulled through the handle 13.

The cord 19 is a single piece and as such, extends between the arms 12a, 12b. By pulling back on the cord section which extends between the arms 12a, 12b, the cord 19 will stretch as it is anchored by the clamp 20 at the base 16 of the handle 13, and will thus develop stored energy for launching shot (not shown). Since there is no rigid coupling of the cord 19 to the arms 12a, 12b or handle 13, there is a reduced risk of snapping of the cord 19, as there is no undue stress applied to the cord 19, such as that which may be associated with tying the cord 19. Moreover, by releasing the clamp 20 the length of the cord 19 which extends between the arms 12a, 12b can be varied for launching shot (not shown) through different distances. In the event that the cord 19 becomes damaged or worn, then a replacement can be easily fitted by removing the clamp 20 and pulling the old cord 19 from within the handle portion 13 and arms 12a, 12b. This obviates the need to replace the entire catapult 10.

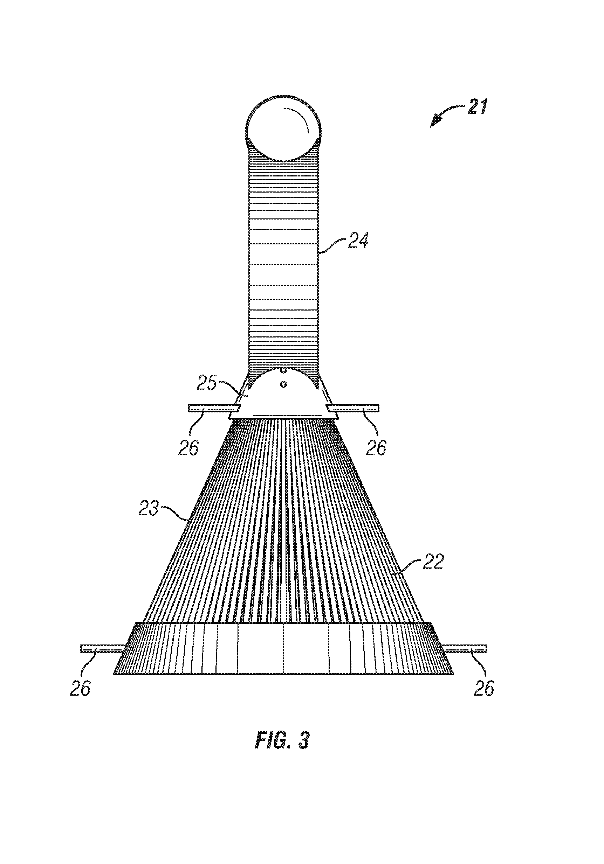

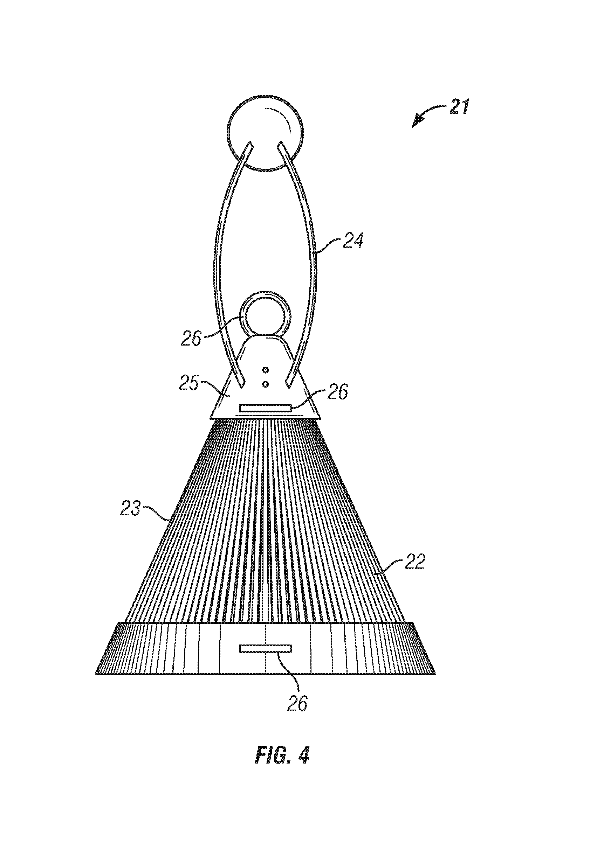

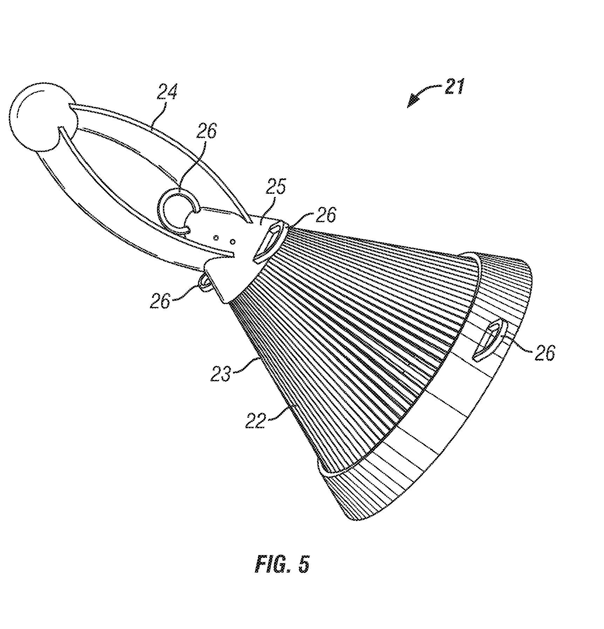

To facilitate the launching of one or more pieces of shot material, such as fish bait, the cord 19 is secured to a shot carrier 21 (as illustrated in figure 3-5) before being threaded through the arms 12a, 12b and handle portion 13 of the catapult 10, as described above. The shot carrier 21 comprises a substantially conically shaped receptacle 22 for holding the shot (not shown) to be launched; the side walls 23 of the receptacle being perforated to facilitate cleaning of the receptacle 22 and to reduce air resistance during the launch of shot. The carrier 21 further comprises a handle or gripping member 24 which extends from the base 25 of the receptacle 22 and which is formed integrally with the receptacle 22. The gripping member 24 extends away from the base 25 in a direction such that the central axis of the gripping member 24 is substantially collinear with the central axis of the receptacle 22.

The exterior surface of the receptacle 22 is formed with a plurality of eyelets 26. The eyelets 26 are formed integrally with the receptacle 22 and are positioned substantially within a plane that comprises a plane of symmetry, or mirror plane, of the receptacle 22. Accordingly, by passing a free end (for example 19a) of the cord 19 through each eyelet 26, around the base 25 of the receptacle 22, the cord 19 becomes wrapped around the receptacle 22 within the mirror plane. Once the cord 19 has been secured to the shot carrier 21, the free ends 19a, 19b of the cord 19 may then be passed within the arms 12a, 12b and handle portion 13 as described above, and clamped using the clamp 20.

In this manner, the shot carrier 21 becomes slidably secured to the section of cord that extends between the arms 12a, 12b. However, since the cord 19 passes around the carrier 21 and is not fixedly secured to the carrier 21, then there is a reduced risk of snapping of the cord 19 as compared with a cord 19 that is rigidly secured to a shot carrier 21.

During use, the shot (not shown) to be launched by the catapult 10 is placed within the receptacle 22 of the carrier 21 and the cord 19 is extended by pulling back on the gripping member 24. Since the gripping member 24 extends substantially along the central axis of the receptacle 22 there is substantially no torque created upon the receptacle 22 when pulling on the gripping member 24 and so an appropriate aim for the shot (not shown) can be achieved. Upon releasing the gripping member 24 the cord 19 quickly retracts so as to launch the shot, however, the eyelets 26 maintain the alignment of the shot carrier 21 with the cord 19 to ensure that the shot (not shown) is launched in the launch direction. The conical shape of the receptacle 22 further enables the distribution of the force of the cord 19 acting upon the base 25, over the surface 23 of the receptacle 22. This helps to minimise any distortion of the receptacle 22 as the cord 19 is released for under tension and thus improves the accuracy of the launched shot.

From the foregoing therefore, it is evident that the catapult and shot carrier of the present invention provides for a reliable and adjustable means of launching shot.

## Claims

1. A catapult comprises a bifurcated body having a handle and a pair of arms which diverge from an end of the handle, the catapult further comprises an elongate resiliently extendable member which extends between the arms, wherein the member comprises opposite ends which extend along respective arms and which are releasably secured relative to the body.

2. A catapult as claimed in Claim 1 wherein the resiliently extendable member extends along the handle.

3. A catapult as claimed in Claim 1 wherein the opposite ends of the member extend outwardly from the handle.

4. A catapult as claimed in Claim 1 wherein the handle and each arm of the body are preferably hollow such that the opposite ends of the member can preferably pass within the body, through the respective arms and the handle.

5. A catapult as claimed in Claim 1 wherein the opposite ends of the member are preferably releasably clamped with clamping means, such that the opposite ends of the member cannot be pulled from the body when the member is under tension. Upon releasing the clamping means, the length of the member between the arms can be varied so as to alter the launching force that can be applied to the shot and thus the distance through which the shot can be launched

6. A catapult as claimed in Claim 1 wherein the clamping means comprises a clamp which clamps the opposite ends together and/or which clamps the opposite ends to the handle.

7. A catapult as claimed in Claim 1 further comprises means for receiving the shot to be launched.

8. A catapult as claimed in Claim 7 wherein the means for receiving the shot to be launched comprises a shot carrier, the shot carrier comprising a receptacle for holding the shot and a handle extending from the receptacle for gripping the carrier.

9. A catapult as claimed in Claim 8 wherein the resiliently extendable member preferably extends along a passage defined on the shot receiving means, which couples the latter to the member.

10. A catapult as claimed in Claim 9 wherein the passage preferably comprises a plurality of eyelets disposed on the exterior of the shot receiving means, through which the member may extend.

11. A catapult as claimed in Claim 8 wherein the carrier handle preferably extends from the receptacle in a direction, such that the central axis of the handle extends substantially along a central axis of the receptacle.

12. A shot carrier for receiving shot to be launched by a catapult comprises a receptacle for holding the shot and a handle secured to the receptacle for gripping the carrier.

13. A shot carrier as claimed in Claim 12 wherein the receptacle comprises a substantially conical shaped body.

14. A catapult comprising a bifurcated body having a handle and a pair of arms which diverge from an end of the handle, the catapult further comprising an elongate resiliently extendable member which extends between the arms and a shot carrier for receiving the shot to be launched coupled to the member at a point intermediate the arms.

15. A catapult as claimed in Claim 14 wherein the member extends through a passage formed in the shot carrier, which couples the member to the shot carrier.
